(19) Europäisches Patentamt
European Patent Office
Office européen des brevets

(11) **EP 2 391 203 B1**

(12) **EUROPEAN PATENT SPECIFICATION**

(45) Date of publication and mention
of the grant of the patent:
**17.04.2013  Bulletin 2013/16**

(51) Int Cl.:
**A01K 1/01** (2006.01)     **A47L 9/00** (2006.01)

(21) Application number: **10702548.8**

(22) Date of filing: **25.01.2010**

(86) International application number:
**PCT/NL2010/000010**

(87) International publication number:
**WO 2010/087694 (05.08.2010 Gazette 2010/31)**

(54) **DEVICE FOR CARRYING OUT ACTIVITIES ON A STABLE FLOOR**

VORRICHTUNG ZUR AUSFÜHRUNG VON AKTIVITÄTEN AUF EINEM STALLBODEN

DISPOSITIF POUR METTRE EN  OEUVRE DES ACTIVITÉS SUR UN PLANCHER D'ÉCURIE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:  **30.01.2009  NL 1036488**

(43) Date of publication of application:
**07.12.2011  Bulletin 2011/49**

(73) Proprietor: **Lely Patent N.V.**
**3147 PA Maassluis (NL)**

(72) Inventor: **PASTOOR, Jan Lambertus**
**NL-3147 PA Maassluis (NL)**

(74) Representative: **Jennen, Peter Leonardus Hendricus**
**Octrooibureau van der Lely N.V.**
**Weverskade 110**
**3147 PA Maassluis (NL)**

(56) References cited:
**FR-A- 1 413 861        NL-A- 6 410 110**
**NL-C- 1 033 591        US-A1- 2005 251 947**
**US-A1- 2006 123 582    US-A1- 2006 191 096**
**US-A1- 2008 302 586**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

The invention relates to a device for carrying out activities on a stable floor, in particular for removing manure present on the stable floor. The invention also relates to an assembly of such a device and a stable floor.

Such devices are known in many designs, such as from EP 1.690.450, disclosing an unmanned self-propelled and self-steering device for removing manure, which is provided with a manure scraper and a drive device which is located therebehind and which has two drive wheels located on both sides. For the steering there can be provided an operable steering wheel.

A comparable device is known from DE 20 2007 014 840, in which a double caster wheel is mounted at the rear side of the device.

A cleaning robot with double supporting wheels is known from US-A-2008/0302586.

The caster wheels usually have a small diameter with respect to the drive wheels. In the case of floors provided with interruptions, such as floors provided with transverse grooves (grooved floor) or floors provided with throughgoing slots (slatted floor), the caster wheels may duck at least partially into the groove, slot, et cetera, so that the device may sag to some extent at that location. The result thereof is a device which, when viewed in the vertical plane, has a bumpy, irregular course.

SUMMARY OF THE INVENTION

It is an object of the invention to provide a device of the type mentioned in the preamble, which can have a more regular course on floors provided with interruptions.

It is an object of the invention to provide a device of the type mentioned in the preamble, which is provided with a swivel arrangement for supporting members, in particular a caster roller arrangement, in particular a caster wheel arrangement, and which can nevertheless have a relatively regular course on floors provided with interruptions.

It is an object of the invention to provide an assembly of the type mentioned in the preamble, having a floor provided with interruptions, wherein the device used can have a more regular course.

In order to achieve at least one of these objects, the invention as defined in claim 1, from one aspect, provides an unmanned self-propelled device for carrying out activities in a stable, in particular a stable with a floor which, in its upper surface, is provided with a pattern of optionally vertically throughgoing interruptions, wherein the device comprises a frame with a longitudinal direction which coincides with a main direction of travel of the device, wherein the device comprises a first and a second supporting member for the frame, which, in relation to the dimensions of the device, are disposed in the vicinity of each other and are connected to the frame and form a first and a second supporting surface, wherein the first and the second supporting surface are both formed to provide, when viewed in a first vertical plane containing the main direction of travel of the device, a first and a second contact location with the floor, wherein, when the two supporting members are directed for moving the device in the main direction of travel, the first and second contact locations provide first and second contact location centre lines, respectively, which are transverse to the first vertical plane and which do not coincide with each other. There is thus provided, in the vicinity of one of said supporting members, an additional supporting point by the other supporting member, in direction of travel at a (short) distance therefrom, so that, when the one supporting member would move downwardly as a result of the presence of an interruption, such as a groove, the device still remains in said surroundings supported on the floor, beside the interruption. The first and second contact location centre lines are lines, which are mutually parallel, can be considered as lines that pass through the centre of gravity of the contact location in question. The supporting members can in particular be designed as supporting rollers, more in particular as supporting wheels. The supporting members can have substantially the same shape and dimensions.

In one embodiment, when the two supporting members are directed for moving the device in the main direction of travel, the first and second contact locations, when viewed in a second vertical plane which is transverse to the first vertical plane, are in a staggered position with respect to each other. When viewed in main direction, the contact locations are then located one obliquely behind the other.

The two contact locations, when viewed in the first vertical plane, can provide at least approximately a point contact with the floor. The two contact locations, when viewed in a second vertical plane which is transverse to the first vertical plane, can provide an at least approximately line-shaped contact with the floor, according to the first and second contact location centre lines.

In an embodiment in which the device has a high degree of steerability, the first and second supporting members are each swivable about a, whether or not their own, vertical swivel centre line.

According to the invention, however, the first and the second supporting member, for the swivelling movement, are rotatable about a common vertical swivel centre line.

The device can have a central longitudinal plane, the swivel centre line being located in or near the central longitudinal plane.

The optimum distance between the two contact location centre lines depends on the dimensions of the interruptions. Attuned to current dimensions of interruptions in stable floors, the distance between the first and the second contact location centre line can amount to approximately 2 cm or more. More exactly, the distance between the first and the second contact location centre line can amount to approximately 3 cm or more, preferably more than approximately 3.8 cm. The distance between the first and the second contact location centre line can be smaller than approximately 4 cm.

The device according to the invention described in the foregoing can be provided with a manure displacing means, in particular a manure scraper. In a first further development thereof, the first and second supporting members are located in front of the manure displacing means. In a second further development thereof, the first and second supporting members are located behind the manure displacing means, in which case it is possible for the supporting members to slide (supporting members are for example sliding shoes) or to travel (supporting members are for example rollers, such as wheels) over a less contaminated floor.

In a manner known per se, the device can be provided with two drive members engaging the floor, such as drive wheels, which are located behind the first and the second supporting member, on both sides of the device.

The device can be self-steering, in particular be provided with a drive for swivelling the first and second supporting members.

In a further development of the device according to the invention, the supporting members are designed as supporting rollers which are rotatable about a first and a second substantially horizontal roller centre line (H1,H2), respectively, wherein the first and second roller centre lines are located vertically above the first and second contact location centre lines, respectively, and parallel thereto.

The first and second supporting rollers can then advantageously have the same diameter. The optimum distance between the two roller centre lines depends on the dimensions of the interruptions. In general, it will be appropriate for stable floors that the distance between the first and the second roller centre line is between approximately ¼ and approximately 2x the roller diameter, preferably between approximately ½ and approximately 1x the roller diameter.

From a further aspect, the invention provides an assembly of a stable floor and a device according to the invention, wherein the stable floor is provided in its upper surface with interruptions which are transverse to a main direction of the floor, which interruptions have a width measured in the main direction, wherein the distance between the contact location centre lines is greater than or equal to the width of the interruptions, in particular √2x that width.

From a further aspect, the invention, as defined in claim 8, provides an unmanned self-propelled device for carrying out activities in a stable, in particular a stable with a floor which, in its upper surface, is provided with a pattern of optionally vertically throughgoing interruptions, wherein the device comprises a frame with a longitudinal direction which coincides with a main direction of travel of the device, wherein the device comprises a first and a second supporting roller for the frame, which, in relation to the dimensions of the device, are disposed in the vicinity of each other and are connected to the frame in such a manner that they are rotatable about a first and a second substantially horizontal roller centre line, respectively, wherein, when the two supporting rollers are directed for moving the device in the main direction of travel, the first and second roller centre lines are parallel and do not coincide with each other. There is thus provided, in the vicinity of one of said supporting rollers, an additional supporting point by the other supporting roller, in direction of travel at a (short) distance therefrom, so that, when the one supporting member would move downwardly as a result of the presence of an interruption, such as a groove, the device still remains supported on the floor in said surroundings, beside the interruption. The supporting rollers can in particular be designed as supporting wheels.

The invention applies in particular to caster rollers, in which case the first and the second roller each form a caster roller, whether or not about their own centre lines. Caster rollers are usually smaller than drive rollers and, in view of their usual dimensions, have a considerable chance of falling into grooves or slots in a stable floor.

According to the invention, however, the first and second supporting rollers, for the swivelling movement, are rotatable about a common vertical swivel centre line.

Favourable elaborations thereof are described in the attached claims, the text of which should be considered here as inserted.

From a further aspect, there is also provided an unmanned self-propelled device for carrying out activities in a stable, in particular a stable with a floor which, in its upper surface, is provided with a pattern of optionally vertically throughgoing interruptions, wherein the device comprises a frame with a longitudinal direction which coincides with a main direction of travel of the device, wherein the device comprises a first and a second supporting roller for the frame, which are connected to the frame in such a manner that they are rotatable about a first and a second roller centre line, respectively, wherein the first and second roller centre lines are parallel and are located at a distance from each other and wherein the first and the second supporting roller, for the swivelling movement, are rotatable about a common vertical swivel centre line. Also in this case, the supporting rollers can in particular be designed as supporting wheels.

In the device described in the foregoing, wherein the supporting rollers are designed as supporting wheels, the first and second supporting wheels can be located in a direction perpendicular to the main direction of travel in a staggered position, preferably at a distance of at most 2x the wheel thickness.

In the device described in the foregoing, it is possible for the two rollers to overlap each other at least partially when seen in side view parallel to the roller centre lines.

The device can be self-steering, in particular be provided with a drive for swivelling the first and the second supporting roller.

From a further aspect, the invention provides an assembly of a stable floor and a device according to the invention, wherein the stable floor is provided in its upper surface with interruptions which are transverse to a main direction of the floor, which interruptions have a width measured in the main direction, wherein the distance between the roller axes is greater than or equal to the width of the interruptions, in particular √2x that width. In the latter case, the aforementioned effect of taken-over support is also present if the interruption, such as a groove or slot, is crossed obliquely, at an angle of 45 degrees or less with respect to the main direction of travel (usually the main direction of a passageway in a stable).

From a further aspect, whether or not in combination with the aforementioned aspect, the invention provides an assembly of a stable floor and a device according to the invention, wherein the stable floor is provided in its upper surface with interruptions which are transverse to a main direction of the floor, which interruptions have a width measured in the main direction, wherein the radius of the rollers is smaller than or equal to √12x the width of the interruptions, in particular is smaller than or equal to the width of the interruptions.

In one embodiment, the stable floor is designed as a so-called profiled closed floor, in particular as a grooved floor.

In another embodiment, the stable floor is designed as a so-called slatted floor, such as a so-called slotted floor or a round-holes floor.

The invention further provides a stable provided with an assembly according to the invention.

It is observed that WO 97/31524 discloses a device suspended from an overhead conveyor for sucking manure from a floor, which is provided with a robot arm with a substantially block-shaped holder with a sucking nozzle and a spraying nozzle provided at its lower end. The largest size of the holder is oriented transversely to the direction of travel and the holder is supported on the ground by means of three fixed wheels, two of which being located on both sides of the holder, their rotational centre lines being in line, and a third wheel being located in top view therebetween and at a distance of approximately 1x the wheel diameter in front thereof, at the front side of the holder.

It is observed that by unmanned self-propelled device and unmanned self-steering device, respectively, are meant both at least substantially autonomously travelling and steering devices, respectively, whether or not programmed for this purpose, such as the Discovery (registered trademark) manure scraper of the registered trademark Lely, and devices in which the propelling and/or steering are/is remotely controlled. In both cases, a motor for the travelling of the device is provided in the device itself.

The aspects and features described in this description and the claims of the application and/or shown in the figures of this application may, where possible, also be used separately from each other. These separate aspects may be the subject of divisional patent applications related thereto. This holds in particular for the features and aspects which are described per se in the dependent claims.

BRIEF DESCRIPTION OF THE FIGURES

The invention will be explained with reference to an exemplary embodiment shown in the attached figures, in which:

Figures 1A and 1B show a top and a side view, respectively, of an exemplary embodiment of a device according to the invention, and
Figure 2 shows a schematic view of a detail of an arrangement with a swivel or caster wheel for the device of Figures 1A and 1B, on a floor.

DETAILED DESCRIPTION OF THE FIGURES

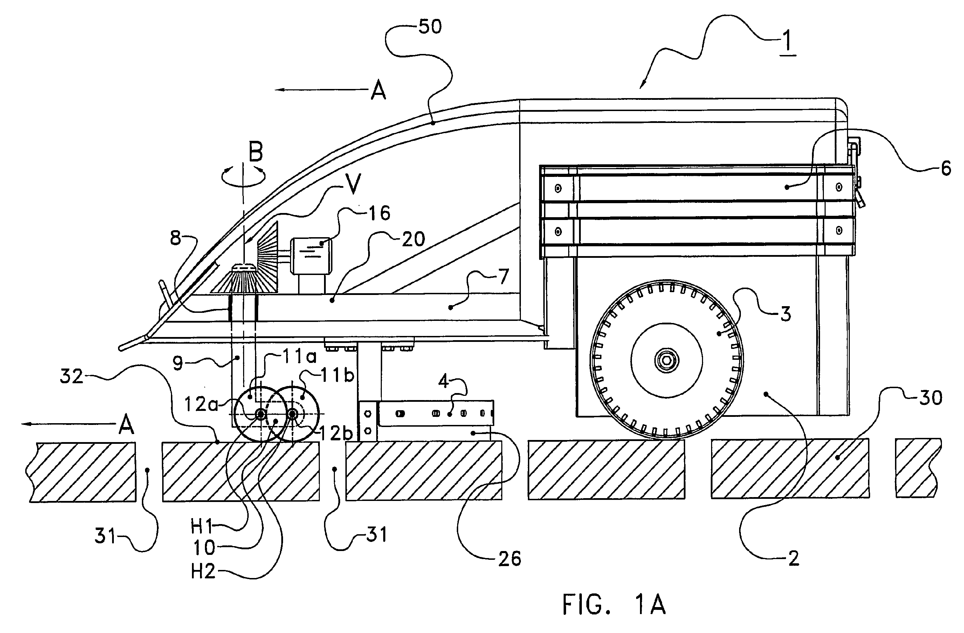

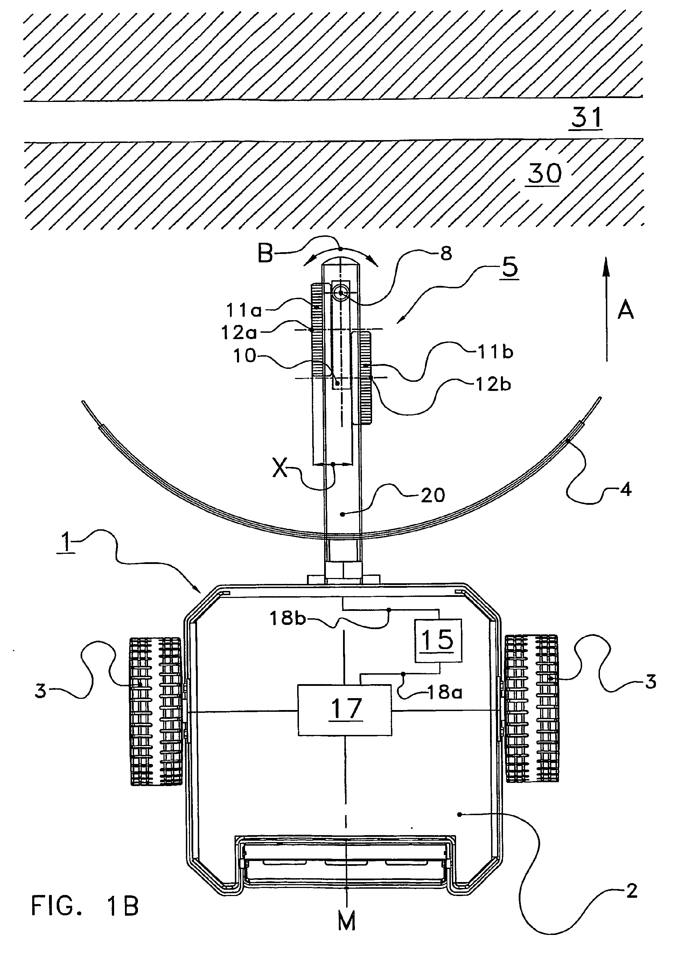

The device 1 shown in Figures 1A and 1B for removing manure from a so-called slatted floor 30 provided with transverse slots 31 of a passageway of a stable comprises a frame 7 with a relatively heavy, block-shaped concrete housing 2. The frame 7, screened by a hood 50 at its front, is supported on the floor 30 by two wheels 3, a manure scraper 4 which is located in front of the housing 2 and which has a sweeping strip 26 of synthetic material, and a supporting member unit, designed here as a roller unit, in particular as a wheel unit 5. The housing 2 is provided on both sides with current collectors 6, by means of which a non-shown accumulator, included in the housing 2, can be charged at an external charging station, as used in the manure scraper device which is offered by Lely (registered trademark) under the name Discovery (registered trademark). The manure scraper 4 and the wheel unit 5 are wholly located in front of the housing 2 and thus in front of the drive, as is visible in Figures 1A and 1B, and seen in projection on a central longitudinal plane M of the device 1. In the example, the wheel unit 5 is located in front of the manure scraper 4. Alternatively, the wheel unit 5 can be located between the wheels 3 and the manure scraper 4, in which case the distance between the manure scraper 4 and the wheels 3 will be greater.

The housing 2 accommodates a control unit 15 which is fed by the accumulator and which controls, via the control line 18a, a double electric motor 17, by means of which the wheels 3 can be driven individually. The control unit 15 is capable of being programmed remotely, so that the device 1 can follow autonomously a certain working route, in a repeating manner.

The wheel unit 5 can be a trestle wheel unit. In this example, the wheel unit 5 is designed as a caster wheel unit. Figure 1B shows, of the frame 7, a longitudinal girder 20 which is fixedly connected to the frame 7 and the housing 2 and which is centered with respect to the central longitudinal plane M. In the front part of the longitudinal girder 20 there is provided a bearing 8 in which a vertical axis 9 of caster wheel unit 5 is bearing-supported so as to be rotatable in directions B, about a vertical centre line located in the central longitudinal plane M. The caster wheel unit 5 can be passive. In one embodiment (additionally shown here), the rotation of the axis 9 can be controlled by a motor 16 which is controlled by the control unit 15, via the control line 18b, by means of which the swivability of the device 1 is enhanced.

To the lower end of the axis 9 there is fixedly attached a horizontal strip 10 on which two wheels 11 a, 11 b having the same diameter D and having their own, mutually parallel axes of rotation 12a,b are attached in a freely rotatable manner. The wheels 11a,b are located in a direction transverse to the direction A in a staggered position, at a mutual distance X, for example 2x the wheel thickness at the most, in this example approximately one weel thickness + the thickness of the strip 10.

The cylindrical wheels 11a,b make contact with the floor surface 32 at contact locations which are relatively small, approximately line-shaped. The contact locations can form (very) small strip-shaped contact locations which extend perpendicularly to the plane of drawing of Figure 1A. The centre line of said strips can then be considered as contact location centre line, which therefore extends horizontally and perpendicularly to the plane of drawing of Figure 1A. The contact location centre lines are thus located straight below the rotational centre lines H1 and H2 and are parallel thereto.

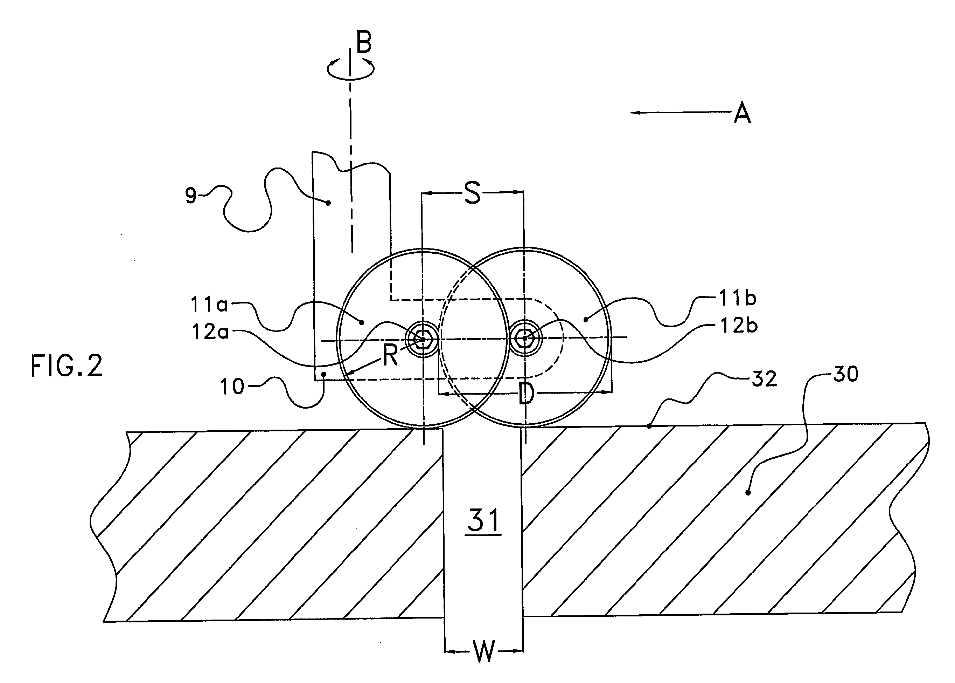

Differently from what is usual with double caster wheels, the wheels 11 a,b are not coaxially bearing-supported, but mounted in a staggered position in the direction of the strip 10. This is shown in further detail in Figure 2, in which the floor 30 is provided with slots 31 which have a width W and which are directed transversely to the main direction A of the passageway or manure alley. The wheels 11a,b have a diameter D and a radius R. The distance between the axes of rotation 12a,b amounts to S. It can be seen that, with the dimensional proportions drawn in the figure, when the caster wheel unit 5 travels over a transverse slot 31, always one of the two wheels 11a,b is wholly supported on the upper surface 32 of the floor 30, so that the two wheels 11 a,b remain at the same level and do not get into the slot 31, which until now was the case with caster wheels.

Starting from a given slot width W, which varies per country and per manufacturer and per design, the person skilled in the art will be able to determine the desired dimensions of D (and thus of R) and S to carry out the invention. By way of example, W, S and D can amount to 2 cm, 2.5 cm and 4.2 cm, respectively, as indicated in Figure 2. The wheels 11 a,b overlap each other in side view, as shown, resulting in a proper swivability. S amounts to at least W. In the case of steering diagonally over the slots, S can amount to at least $\sqrt{2}$x W in order to provide also in that case a regular course. If S is somewhat greater than 2R or D, the wheels 11 a,b of the caster wheel unit do not coincide in side view.

The above-mentioned description serves to illustrate the operation of preferred embodiments of the invention, and not to limit the scope of the invention. On the basis of the above-mentioned explanation, it will be obvious for a person skilled in the art that there are many variations falling within the scope of the present invention, as defined in the appended claims.

**Claims**

1. Unmanned self-propelled device (1) for carrying out activities in a stable, in particular a stable with a floor (30) which, in its upper surface, is provided with a pattern of optionally vertically throughgoing interruptions (31), wherein the device comprises a frame (7) with a longitudinal direction which coincides with a main direction of travel of the device, wherein the device comprises a first and a second supporting member (11a,b) for the frame (7), which, in relation to the dimensions of the device (1), are disposed in the vicinity of each other and are connected to the frame (7) and form a first and a second supporting surface, wherein the first and the second supporting surface are both formed to provide, when viewed in a first vertical plane containing the main direction of travel of the device (1), a first and a second contact location with the floor (30), wherein, when the two supporting members (11a,b) are directed for moving the device (1) in the main direction of travel, the first and second contact locations provide first and second contact location centre lines, respectively, which are transverse to the first vertical plane and which do not coincide with each other, **characterized in that** the first and second supporting members (11a, b) are each swivable about a vertical swivel centre line, wherein the first and second supporting members (11a,b), for a swivelling movement, are swivable about a common vertical swivel centre line (V).

2. Device (1) according to claim 1, wherein the device (1) has a central longitudinal plane (M) and the swivel centre line (V) is located in or near the central longitudinal plane (M).

3. Device (1) according to one of the preceding claims, wherein the device (1) is self-steering, in particular is provided with a drive (16) for swivelling the first and second supporting members (11a,b).

4. Device (1) according to one of the preceding claims, wherein the supporting members (11a,b) are designed as supporting rollers which are rotatable about a first and a second substantially horizontal roller centre line (H1,H2), respectively, wherein the first and second roller centre lines (H1,H2) are located vertically above the first and second contact location centre lines, respectively, and are parallel thereto.

5. Device (1) according to claim 4, wherein the first and second supporting rollers (11a,b) have the same diameter.

6. Device (1) according to claim 5, wherein the distance between the first and the second roller centre line (H1,H2) is between approximately ¼ and approximately 2x the roller diameter, preferably between approximately ½ and approximately 1 x the roller diameter.

7. Device (1) according to claim 4, 5 or 6 wherein the supporting rollers are designed as supporting wheels (11 a,b).

8. Unmanned self-propelled device (1) for carrying out activities in a stable, in particular a stable with a floor (30) which, in its upper surface, is provided with a pattern of optionally vertically throughgoing interruptions (31), wherein the device comprises a frame (7) with a longitudinal direction which coincides with a main direction of travel of the device (1), wherein the device (1) comprises a first and a second supporting roller (11a,b) for the frame (7), which, in relation to the dimensions of the device (1), are disposed in the vicinity of each other and are connected to the frame (7) in such a manner that they are rotatable about a first and a second substantially horizontal roller centre line (H1,H2), respectively, wherein, when the two supporting rollers (11a,b) are directed for moving the device (1) in the main direction of travel, the first and second roller centre lines (H1,H2) are parallel and do not coincide with each other, **characterized in that** the first and second supporting rollers (11a,b), for a swivelling movement, are rotatable about a common vertical swivel centre line (V).

9. Device (1) according to claim 8, wherein the first and second supporting rollers (11 a,b) have the same diameter and wherein the distance between the first and the second roller centre line (H1,H2) is between approximately ¼ and approximately 2x the roller diameter, preferably between approximately ½ and approximately 1x the roller diameter.

10. Device (1) according to one of claims 8 or 9, wherein the two rollers (11a,b), in side view parallel to the wheel centre lines (H1, H2), overlap each other at least partially.

11. Device (1) according to claims 8-10 wherein the device (1) is self steering, in particular is provided with a drive (16) for swivelling the first and second supporting rollers (11a,b).

12. Assembly of a stable floor (30) and a device (1) according to one of claims 1-7 wherein the stable floor is provided in its upper surface with interruptions (31) which are transverse to a main direction of the floor (30), which interruptions (31) have a width (W) measured in the main direction (A), wherein the distance (S) between the contact location centre lines is greater than or equal to the width of the interruptions (31), in particular √2x that width.

13. Assembly of a stable floor (30) and a device (1) according to one of claims 8-11 wherein the stable floor (30) is provided in its upper surface with interruptions (31) which are transverse to a main direction of the floor (30), which interruptions (31) have a width (W) measured in the main direction (A), wherein the distance (S) between the roller centre lines is greater than or equal to the width of the interruptions (31), in particular √2x that width.

14. Assembly according to claim 13 or of a stable floor (30) and a device (1) according to one of claims 8-11 wherein the stable floor (30) is provided in its upper surface with interruptions (31) which are transverse to a main direction of the floor (30), which interruptions (31) have a width (W) measured in the main direction, wherein the radius (R) of the rollers is smaller than or equal to √2x the width of the interruptions (31), in particular smaller than or equal to the width of the interruptions (31).

15. Assembly according to claim 12, 13 or 14 wherein the stable floor (30) is designed as a so-called profiled closed floor, in particular as a grooved floor.

16. Assembly according to claim 12, 13 or 14 wherein the stable floor (30) is designed as a so-called slatted floor.

17. Assembly according to claim 43, 16 wherein the stable floor (30) is designed as a so-called slotted floor or a round-holes floor.

18. Stable provided with an assembly according to one of claims 12-16.

**Patentansprüche**

1. Unbemannte, selbstfahrende Vorrichtung (1) zum Ausführen von Aktivitäten in einem Stall, insbesondere in einem Stall mit einem Boden (30), welcher an seiner oberen Oberfläche mit einem Muster von wahlweise vertikal durchgehenden Unterbrechungen (31) versehen ist, wobei die Vorrichtung einen Rahmen (7) mit einer Längsrichtung umfasst, welche mit einer Hauptfahrrichtung der Vorrichtung übereinstimmt, wobei die Vorrichtung ein erstes und ein zweites Tragelement (11a, b) für den Rahmen (7) umfasst, welche in Bezug auf die Abmessungen der Vorrichtung (1) in der Nähe zueinander angeordnet sind und mit dem Rahmen (7) verbunden sind und eine erste und eine zweite tragende Auflagefläche bilden, wobei in einer ersten vertikalen Ebene betrachtet, welche die Hauptfahrrichtung der Vorrichtung (1) umfasst, die erste und die zweite tragende Auflagefläche gestaltet sind, um eine erste und eine zweite Kontaktstelle mit dem Boden (30) zu bilden, wobei, wenn die zwei Tragelemente (11a, b) zum Bewegen der Vorrichtung (1) in die Hauptfahrrichtung gerichtet sind, die ersten und zweiten Kontaktstellen erste und zweite Kontaktstellenmittellinien aufweisen, welche quer in der ersten vertikalen Ebene liegen und welche nicht miteinander übereinstimmen,
**dadurch gekennzeichnet, dass**
die ersten und zweiten Tragelemente (11a, b) jeweils um eine vertikale Schwenkmittellinie schwenkbar sind, wobei die ersten und zweiten Tragelemente (11a, b) für eine Schwenkbewegung um eine gemeinsame vertikale Schwenkmittellinie (V) schwenkbar sind.

2. Vorrichtung (1) nach Anspruch 1,
wobei die Vorrichtung (1) eine zentrale Längsebene (M) aufweist und die Schwenkmittellinie (V) in oder nahe der zentralen Längsebene (M) angeordnet ist.

3. Vorrichtung (1) nach einem der vorhergehenden Ansprüche,
wobei die Vorrichtung (1) selbstlenkend ist und insbesondere mit einem Antrieb (16) zum Schwenken der ersten und zweiten Tragelemente (11a, b) ausgerüstet ist.

4. Vorrichtung (1) nach einem der vorhergehenden Ansprüche,
wobei die ersten und zweiten Tragelemente (11a, b) als Stützrollen gestaltet sind, welche um eine erste und eine zweite im Wesentlichen horizontale Rollenmittellinie (H1, H2) drehbar sind, wobei die ersten und zweiten Rollenmittellinien (H1, H2) vertikal über den ersten und zweiten Kontaktstellenmittellinien angeordnet sind und dazu parallel sind.

5. Vorrichtung (1) nach Anspruch 4,
wobei die ersten und zweiten Stützrollen (11a, b) denselben Durchmesser aufweisen.

6. Vorrichtung (1) nach Anspruch 5,
wobei der Abstand zwischen der ersten der zweiten Rollenmittellinie (H1, H2) zwischen ungefähr ¼ und ungefähr 2x dem Rollendurchmesser liegt, vorzugsweise zwischen ungefähr ½ und ungefähr 1x dem Rollendurchmesser.

7. Vorrichtung (1) nach Anspruch 4, 5 oder 6,
wobei die Stützrollen als Stützräder (11a, b) ausgeführt sind.

8. Unbemannte, selbstfahrende Vorrichtung (1) zum Ausführen von Aktivitäten in einem Stall, insbesondere einem Stall mit einem Boden (30), welcher an seiner oberen Oberfläche mit einem Muster von wahlweise vertikal durchgehenden Unterbrechungen (31) versehen ist, wobei die Vorrichtung einen Rahmen (7) mit einer Längsrichtung umfasst, welche mit einer Hauptfahrrichtung der Vorrichtung (1) übereinstimmt, wobei die Vorrichtung (1) eine erste und eine zweite Stützrolle (11a, b) für den Rahmen (7) umfasst, welche in Bezug auf die Abmessungen der Vorrichtung (1) in der Nähe zueinander angeordnet sind und mit dem Rahmen (7) auf solch eine Weise verbunden sind, dass sie um eine erste und eine zweite im Wesentlichen horizontale Rollenmittellinie (H1, H2) drehbar sind, wobei, wenn die zwei Stützrollen (11a, b) zum Bewegen der Vorrichtung (1) in die Hauptfahrrichtung gerichtet sind, die ersten und zweiten Rollenmittellinien (H1, H2) parallel sind und nicht übereinstimmen,
**dadurch gekennzeichnet, dass**
die ersten und zweiten Stützrollen (11a, b) für eine Schwenkbewegung um eine gemeinsame vertikale Schwenkmittellinie (V) drehbar sind.

9. Vorrichtung (1) nach Anspruch 8,
wobei die ersten und zweiten Stützrollen (11a, b) denselben Durchmesser aufweisen und wobei der Abstand zwischen der ersten und der zweiten Rollenmittellinie (H1, H2) zwischen ungefähr ¼ und ungefähr 2x dem Rollendurchmesser liegt, vorzugsweise zwischen ungefähr ½ und ungefähr 1x dem Rollendurchmesser.

10. Vorrichtung (1) nach einem der Ansprüche 8 oder 9,
wobei die zwei Rollen (11a, b) in der Seitenansicht parallel zu den Radmittellinien (H1, H2) einander wenigstens teilweise überlappen.

11. Vorrichtung (1) nach den Ansprüchen 8 bis 10,
wobei die Vorrichtung (1) selbstlenkend ist, insbesondere mit einem Antrieb (16) zum Schwenken der ersten und zweiten Stützrollen (11a, b) ausgestattet ist.

12. Anordnung aus einem Stallboden (30) und einer Vorrichtung (1) nach einem der Ansprüche 1 bis 7,
wobei der Stallboden an seiner oberen Oberfläche mit Unterbrechungen (31) versehen ist, welche sich quer zu einer Hauptrichtung des Bodens (30) erstrecken, wobei die Unterbrechungen (31) gemessen in der Hauptrichtung (A) eine Breite (W) aufweisen, wobei der Abstand (S) zwischen den Kontaktstellenmittellinien größer oder gleich ist zur Breite der Unterbrechungsstellen (31), insbesondere $\sqrt{2x}$ jener Breite.

13. Anordnung aus einem Stallboden (30) und einer Vorrichtung (1) nach einem der Ansprüche 8 bis 11, wobei der Stallboden (30) an seiner oberen Oberfläche mit Unterbrechungen (31) versehen ist, welche sich quer zu einer Hauptrichtung des Bodens (30) erstrecken, wobei die Unterbrechungen (31) gemessen in der Hauptrichtung (A) eine Breite (W) aufweisen, wobei der Abstand (S) zwischen den Rollenmittellinien größer oder gleich ist zur Breite der Unterbrechungsstellen (31), insbesondere $\sqrt{2}_X$ jener Breite.

14. Anordnung nach Anspruch 13 oder Anordnung aus einem Stallboden (30) und einer Vorrichtung (1) nach einem der Ansprüche 8 bis 11, wobei der Stallboden (30) an seiner oberen Oberfläche mit Unterbrechungen (31) versehen ist, welche sich quer zu einer Hauptrichtung des Bodens (30) erstrecken, wobei die Unterbrechungen (31) gemessen in der Hauptrichtung eine Breite (W) aufweisen, wobei der Radius (R) der Rollen kleiner oder gleich ist zu $\sqrt{2x}$ der Breite der Unterbrechungsstellen (31), insbesondere kleiner oder gleich der Breite der Unterbrechungsstellen (31).

15. Anordnung nach Anspruch 12, 13 oder 14, wobei der Stallboden (30) als ein sogenannter geschlossener Profilboden, insbesondere als ein Rillenboden, gestaltet ist.

16. Anordnung nach Anspruch 12, 13 oder 14, wobei der Stallboden (30) als ein sogenannter Spaltenboden gestaltet ist.

17. Anordnung nach Anspruch 16, wobei der Stallboden (30) als ein sogenannter geschlitzter Boden oder ein Rundlochboden gestaltet ist.

18. Stall, welcher mit einer Anordnung nach einem der Ansprüche 12 bis 16 ausgestattet ist.

**Revendications**

1. Dispositif autopropulsé sans pilote (1) pour réaliser des activités dans une écurie, en particulier une écurie avec un plancher (30) qui, dans sa surface supérieure, est pourvu d'une configuration d'interruptions facultativement traversantes de façon verticale (31), dans lequel le dispositif comprend un cadre (7) avec une direction longitudinale qui coïncide avec une direction principale de déplacement du dispositif, dans lequel le dispositif comprend des premier et second éléments de support (11a, b) pour le cadre (7), qui, par rapport aux dimensions du dispositif (1), sont disposés dans le voisinage l'un de l'autre et sont raccordés au cadre (7) et forment des première et seconde surfaces de support, dans lequel les première et seconde surfaces de support sont toutes les deux formées pour fournir, en vue dans un premier plan vertical contenant la direction principale de déplacement du dispositif (1), des premier et second emplacements de contact avec le plancher (30), dans lequel, lorsque les deux éléments de support (11a, b) sont dirigés pour déplacer le dispositif (1) dans la direction principale de déplacement, les premier et second emplacements de contact fournissent des axes des premier et second emplacements de contact, respectivement, qui sont transversaux au premier plan vertical et qui ne coïncident pas l'un avec l'autre, **caractérisé en ce que** les premier et second éléments de support (11a, b) peuvent chacun pivoter autour d'un axe de pivotement vertical, dans lequel les premier et second éléments de support (11a, b), pour un mouvement de pivotement, peuvent de préférence pivoter autour d'un axe de pivotement vertical commun (V).

2. Dispositif (1) selon la revendication 1, dans lequel le dispositif (1) comporte un plan longitudinal central (M) et l'axe de pivotement (V) est positionné dans le ou près du plan longitudinal central (M).

3. Dispositif (1) selon une des revendications précédentes, dans lequel le dispositif (1) est autoguidé, en particulier est pourvu d'un entraînement (16) pour faire pivoter les premier et second éléments de support (11a, b).

4. Dispositif (1) selon une des revendications précédentes, dans lequel les éléments de support (11a, b) sont conçus sous forme de rouleaux de support qui sont rotatifs autour de premier et second axes de rouleau sensiblement horizontaux (H1, H2), respectivement, dans lequel les premier et second axes de rouleau (H1, H2) sont positionnés verticalement au-dessus des axes des premier et second emplacements de contact, respectivement, et sont parallèles à ceux-ci.

5. Dispositif (1) selon la revendication 4, dans lequel les premier et second rouleaux de support (11a, b) possèdent le même diamètre.

6. Dispositif (1) selon la revendication 5, dans lequel la distance entre les premier et second axes de rouleau (H1, H2) est entre approximativement ¼ et approximativement 2x le diamètre de rouleau, de préférence entre approximativement ½ et approximativement 1x le diamètre de rouleau.

7. Dispositif (1) selon la revendication 4, 5 ou 6, dans lequel les rouleaux de support sont conçus sous forme de roues de support (11a, b).

8. Dispositif autopropulsé sans pilote (1) pour réaliser des activités dans une écurie, en particulier une écurie avec un plancher (30) qui, dans sa surface supérieure, est pourvu d'une configuration d'interruptions facultativement traversantes de façon verticale (31), dans lequel le dispositif comprend un cadre (7) avec une direction longitudinale qui coïncide avec une direction principale de déplacement du dispositif (1), dans lequel le dispositif (1) comprend des premier et second rouleaux de support (11a, b) pour le cadre (7), qui, par rapport aux dimensions du dispositif (1), sont disposés dans le voisinage l'un de l'autre et sont raccordés au cadre (7) de sorte qu'ils sont rotatifs autour de premier et second axes de rouleau sensiblement horizontaux (H1, H2), respectivement, dans lequel, lorsque les deux rouleaux de support (11a, b) sont dirigés pour déplacer le dispositif (1) dans la direction principale de déplacement, les premier et second axes de rouleau (H1, H2) sont parallèles et ne coïncident pas l'un avec l'autre, **caractérisé en ce que** les premier et second rouleaux de support (11a, b), pour un mouvement de pivotement, sont rotatifs autour d'un axe commun de pivotement vertical (V).

9. Dispositif (1) selon la revendication 8, dans lequel les premier et second rouleaux de support (11a, b) possèdent le même diamètre et dans lequel la distance entre les premier et second axes de rouleau (H1, H2) est entre approximativement ¼ et approximativement 2x le diamètre de rouleau, de préférence entre approximativement ½ et approximativement 1x le diamètre de rouleau.

10. Dispositif (1) selon une des revendications 8 ou 9, dans lequel les deux rouleaux (11a, b), en vue latérale parallèle aux axes de roue (H1, H2), se chevauchent au moins partiellement.

11. Dispositif (1) selon les revendications 8 à 10, dans lequel le dispositif (1) est autoguidé, en particulier est pourvu d'un entraînement (16) pour faire pivoter les premier et second rouleaux de support (11a, b).

12. Ensemble d'un plancher d'écurie (30) et d'un dispositif (1) selon une des revendications 1 à 7, dans lequel le plancher d'écurie est pourvu, dans sa surface supérieure, d'interruptions (31) qui sont transversales à une direction principale du plancher (30), lesquelles interruptions (31) possèdent une largeur (W) mesurée dans la direction principale (A), dans lequel la distance (S) entre les axes d'emplacement de contact est supérieure ou égale à la largeur des interruptions (31), en particulier √2x cette largeur.

13. Ensemble de a écurie plancher (30) et un dispositif (1) selon une des revendications 8 à 11, dans lequel le plancher d'écurie (30) est pourvu, dans sa surface supérieure, d'interruptions (31) qui sont transversales à une direction principale du plancher (30), lesquelles interruptions (31) possèdent une largeur (W) mesurée dans la direction principale (A), dans lequel la distance (S) entre les axes de rouleau est supérieure ou égale à la largeur des interruptions (31), en particulier √2x cette largeur.

14. Ensemble selon la revendication 13 ou d'un plancher d'écurie (30) et d'un dispositif (1) selon une des revendications 8 à 11, dans lequel le plancher d'écurie (30) est pourvu, dans sa surface supérieure, d'interruptions (31) qui sont transversales à une direction principale du plancher (30), lesquelles interruptions (31) possèdent une largeur (W) mesurée dans la direction principale, dans lequel le rayon (R) des rouleaux est inférieur ou égal à √2x la largeur des interruptions (31), en particulier inférieur ou égal à la largeur des interruptions (31).

15. Ensemble selon la revendication 12, 13 ou 14, dans lequel le plancher d'écurie (30) est conçu sous forme de plancher dit fermé profilé, en particulier sous forme de plancher cannelé.

16. Ensemble selon la revendication 12, 13 ou 14, dans lequel le plancher d'écurie (30) est conçu sous forme de plancher dit latté.

17. Ensemble selon la revendication 16, dans lequel le plancher d'écurie (30) est conçu sous forme de plancher dit rainuré ou de plancher à trous arrondis.

18. Écurie pourvue d'un ensemble selon une des revendications 12 à 16.

EP 2 391 203 B1

FIG. 1A

FIG. 1B

FIG.2

B

A

9

S

11a
12a

11b
12b

R

10

D

31

W

32

30

EP 2 391 203 B1

**EP 2 391 203 B1**

**Patent documents cited in the description**

- EP 1690450 A
- DE 202007014840
- US 20080302586 A
- WO 9731524 A